# EUROPEAN PATENT APPLICATION

(11) **EP 2 927 665 A1**
(43) Date of publication of application: **07.10.2015**
(21) Application number: 15162473.1
(22) Date of filing: 02.04.2015
(51) Int. Cl.: G01N 3/10, G01M 3/28, G01N 3/12

(54) **Testing apparatus for welded pipes**

(30) Priority: 04.04.2014 IT MI20140624
(71) Applicant: Olimpia Inox S.R.L., 27029 Vigevano (Pavia) (IT)
(72) Inventor: Travini, Livio, 27029 VIGEVANO (PAVIA) (IT)
(74) Representative: Petruzziello, Aldo

(57) **Abstract**

A pneumatic testing apparatus (10) for welded pipes, particularly in steel, placed between a fixed upright (30) and a mobile upright (30') opposite and parallel one to the other and with the mobile upright (30') movable towards/away from the fixed upright (30), comprising a plurality of parallel and adjacent structures or frames (32) each provided with means for the movement of pipes (31) longitudinally placed between said fixed (30) and mobile (30') uprights defined by a transport/storage system (34) comprising a pair of opposite chains or belts (33) provided with rubberised elements (35) apt to support the pipes (31) during transport, a pair of blowing bushing assemblies (36) opposite and parallel and attached, respectively, one to the fixed upright (30) and one to the mobile upright (30') and each provided with blowing bushings (38) apt to be fitted on opposite ends or heads of the pipes (31), said apparatus wherein the blowing bushing assemblies (36) comprise means for rapid replacement and hooking with respect to the fixed and mobile uprights and means for automatic positioning and adjusting of said bushing assemblies with respect to the pipes (31) co-operating with positioning means for pipes (31) for a reciprocal coupling between said pipes and said bushings.

## Description

The present invention relates to a testing apparatus for welded pipes.

More particularly the present invention relates to a pneumatic test plant, especially suitable for performing leak tests under pressure on welded pipes in steel and nonferrous materials for special applications, with said apparatus typically inserted in a test plant apt to perform on welded pipes a plurality of non-destructive tests.

As is known, pipes are used in various areas of application and with different functions which range from the transport of fluids to application in the mechanical and automotive sector, to heat exchange and, in recent times, also for applications in the building sector as constructional/decorative elements.

The materials used for the production of said pipes are many and different as a function of the specific applications, of the area in which they have to be used and the technical and mechanical features required.

Among the many materials used, steel constitutes one of the materials most suitable for the production of welded pipes and, in particular, of steel pipes with high resistance and good weldability which are especially suitable for the construction of lightweight structures, of considerable height and with high load capacity. A typical example in this respect is represented by cranes for building use or by the cutwaters used for the building of motorway viaducts and bridges.

The welded pipes must comply with fully defined standards whose requirements are different as the specific area of application varies and which require the observance of certain mechanical properties, of design load, weldability of the steel, etc.

Observance of standard requirements is ascertained by performing tests carried out outside of the lines of production of the pipes. These are typically non-destructive tests which do not entail the ruining of the pipe and the consequent non-usability of the same. These types of tests are generally defined by ultrasounds tests, tests with eddy currents or tests with penetrating liquids, radiography, tightness tests and the like.

Plants are known which perform, in line, the abovementioned checks or tests of the non-destructive type and which comprise stations for loading of the pipes to be tested, one or more stations which perform the ultrasounds tests, with parasitic currents or similarly known and a station used for the pneumatic test of the type with pressure drop, pressure differential, with or without immersion in water.

With reference to the pneumatic test or check it provides for the use of bushings fitted on the two open ends of the pipes and having the function of blowing pressurised air inside the pipes (maximum pressure 10 bars) with said pipes moved from above by means of gantry crane and restrained and supported, during the pneumatic test phase, by means of pneumatic grippers.

However this known apparatus for the performance of the pneumatic test on pipes in welded steel has some major disadvantages linked to the fact that the blowing bushings have to be replaced at each change of the diameter of the pipes to be checked, with the need to have to stop the production cycle for the performance of this operation. This entails a consequent extension of the times and an increase in the correlated production costs.

These known types of apparatuses entail a further major disadvantage linked to the difficulty of movement of the pipes by means of a gantry crane. This is because this mode of movement makes it difficult to move several pipes simultaneously bearing in mind their considerable lengths and weights.

A further disadvantage is linked to the need for frequent manual interventions by operatives with the purpose of regulating the testing apparatus as a function of the different lengths of pipes subjected to the test.

US 3.054.283A describes a machine for testing the leak of pipes, forcing in them a pressurised liquid.

The object of the present invention is that of obviating the disadvantages stated above. More particularly the object of the present invention is that of providing a pneumatic testing apparatus for welded steel pipes suitable for allowing the contemporary testing of a higher number of pipes with respect to the traditional one.

A further object of the present invention is that of providing a pneumatic testing apparatus suitable for allowing the use of blowing bushings suitable for the management of a range or interval of pipe diameters for the purpose of limiting the machine stops necessary for the replacement of the same.

Further object of the present invention is that of providing a testing apparatus characterised by a fully automatic functioning wherein the operator is assigned the sole functions of checking, loading and unloading the pipes.

A further object of the present invention is to make available to users a testing or control apparatus for welded steel pipes suitable for ensuring a high level of resistance and reliability in time and such, moreover, as to be easily and economically produced.

These and other objects are achieved by the apparatus of the invention which has the features as claimed in claim 1.

According to the invention a pneumatic testing apparatus for welded pipes, particularly in steel, is provided, placed between a fixed upright and a mobile upright opposite and parallel one to the other and with the mobile upright movable towards/away from the fixed upright, comprising a plurality of parallel and adjacent structures or frames each provided with means for the movement of pipes longitudinally placed between said fixed and mobile uprights defined by a transport/storage system comprising a pair of opposite chains or belts provided with rubberised elements apt to support the pipes during transport, a pair of blowing bushing assemblies opposite and parallel and attached, respectively, one to the fixed upright and one to the mobile upright and each provided with blowing bushings apt to be fitted on and tightly close opposite ends or heads of the pipes, the apparatus wherein the blowing bushing assemblies comprise means for rapid replacement and hooking with respect to the fixed and mobile uprights and means for automatic positioning and adjusting of said bushing assemblies with respect to the pipes co-operating with positioning means for pipes for a reciprocal coupling between said pipes and said bushings.

Advantageous embodiments of the invention are disclosed by the dependent claims.

The constructional and functional features of the pneumatic testing apparatus for welded steel pipes of the present invention will be made clearer by the following description, in which reference is made to the accompanying drawings which represent a preferred and non-limiting embodiment thereof and in which:
Figure 1 shows schematically and in an axonometric view a control or test plant for welded steel pipes comprising the pneumatic testing apparatus of the invention;
Figure 2 shows schematically and in an axonometric view a portion of the pneumatic testing apparatus of the present invention;
Figure 3 represents schematically a front view of the portion of testing apparatus as shown in Figure 2;
Figure 4 shows a schematic front view of an enlarged detail A of Figure 3;
Figure 5 shows an axonometric view of the enlarged detail shown in Figure 4;
Figure 6 shows a schematic view sectioned along a plane B-B as shown in Figure 4;
Figure 7 represents schematically a front view of a blowing bushing of the pneumatic testing apparatus of the invention;
Figure 8 shows a schematic view of the blowing bushing sectioned along a plane C-C of Figure 7.

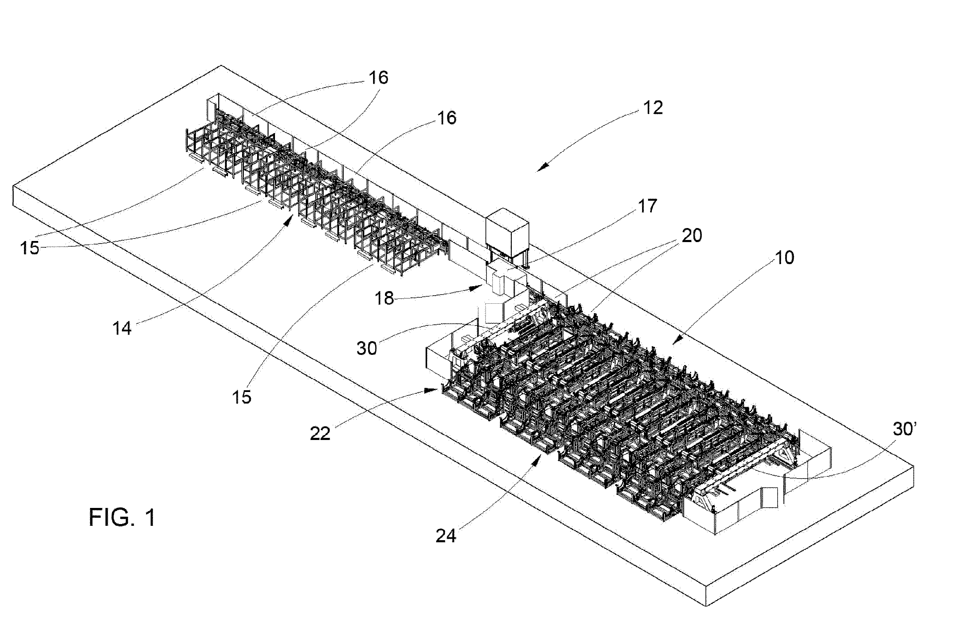

Referring to the aforementioned drawings, the pneumatic testing apparatus for welded steel pipes, denoted overall by 10 in Figure 1, is part of an in-line test plant 12 likewise schematised in Figure 1 and described here below.

The test plant 12 for welded steel pipes is developed in line and comprises:
- an input station 14 comprising four in-line sections each of which has a pipes loading area 15 provided with a slanting surface on which the pack of pipes to be checked is placed and an automatic "pass-no-pass" system which assists an operative in the operation of laying out the pipes and in the placing of the same one next to the other on the aforementioned slanting surface. This station likewise comprises a roller assembly 16 having the function of moving the pipes in the direction of a first station of non-destructive tests 18;
- the first station of non-destructive tests 18 performs a test of the pipes by means of eddy currents and ultrasounds with the aim of checking on the possible presence of surface defects along the entire longitudinal development of the pipe and, in particular, along the welding bead. This first station is enclosed in an insulated and air-conditioned cabin 17 so as to optimise the stability of performances of the ultrasounds device;
- an output and rejection station 20 in which the pipes exiting from the first station of non-destructive tests 18 are moved and automatically selected and sorted, with the pipes that have not passed the first test directed towards the rejection station, while those which have passed said first test are moved in the direction of a second non-destructive tests station defined by the pneumatic testing apparatus 10 of the invention;
- the second station of non-destructive tests or pneumatic testing apparatus 10, hereinafter described in detail;
- a cutting and end-facing station 22 wherein the cutting of a portion of head of the two opposite ends of the pipe (approximately 50 mm) is carried out and a deburring machining of said ends is performed and a cleaning of the internal surface of the pipe which has passed the pneumatic test;
- an unloading and packaging station 24 for the pipes that have positively passed all stages of testing and which are grouped together in bundles, automatically tied and coded for storage and sorting.

The pipes which have not passed the first phase of testing, i.e. that which takes place in the first station of non-destructive tests 18 and which, therefore, are not judged to be conforming, are automatically sorted in the direction of the rejection station which the operator can access in order to form a bundle of pipes, tie it and move it, by gantry crane, to the appropriate sections.

Moreover a possible pipe which, following the pneumatic test, is not considered conforming to the specific standards, continues the traversing of the plant without being subjected to the actions of cutting, deburring and internal cleaning. In fact the system of testing and automatic management of the plant memorises the position of said non-conforming pipe which, only at the end of the cycle, will be directed towards a rejection section of the unloading and packaging station 24.

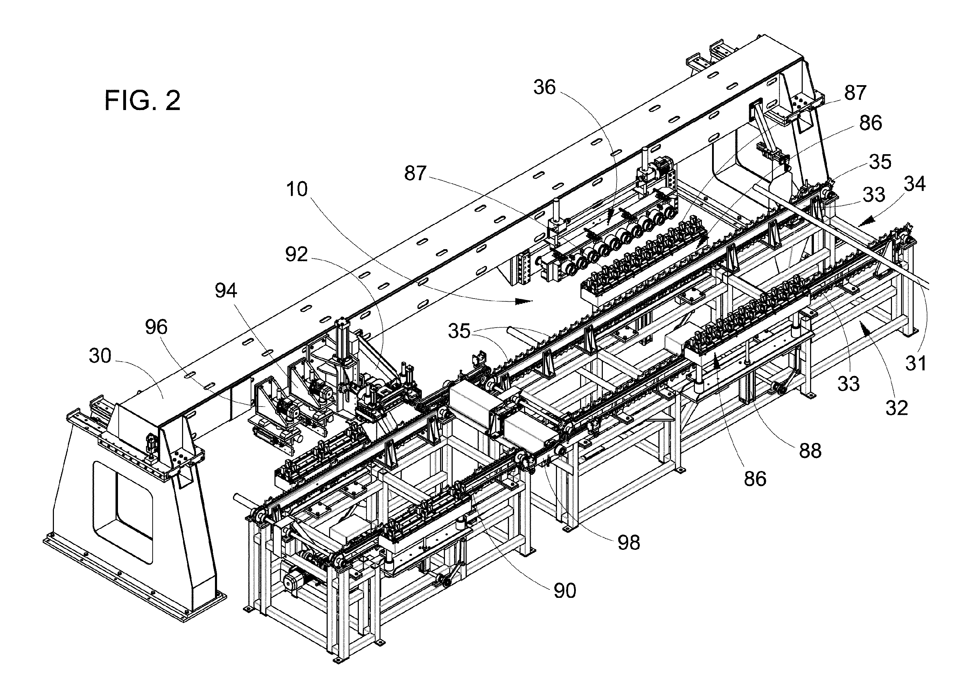

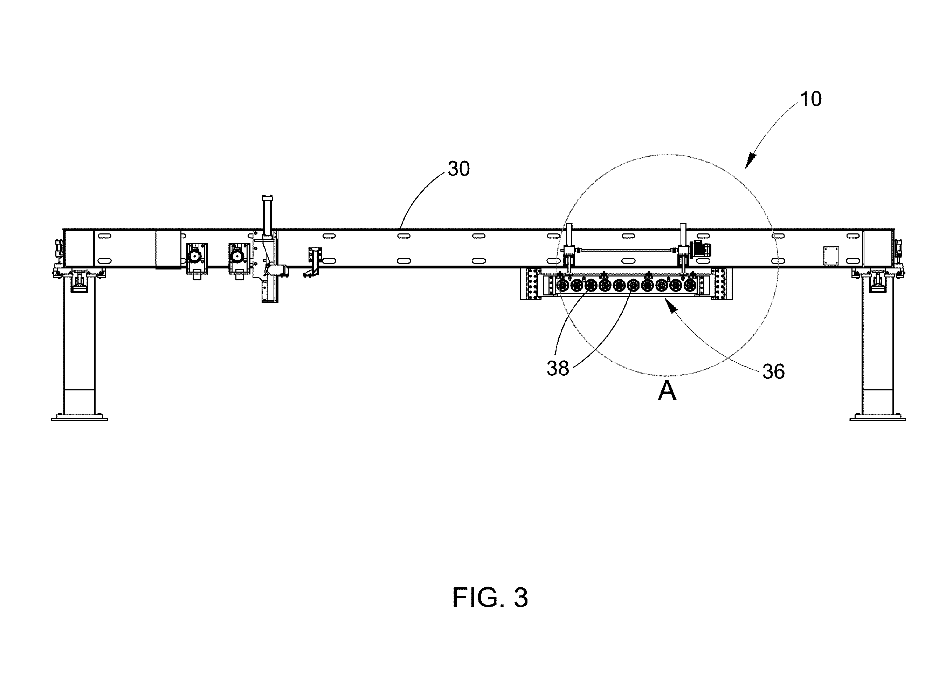

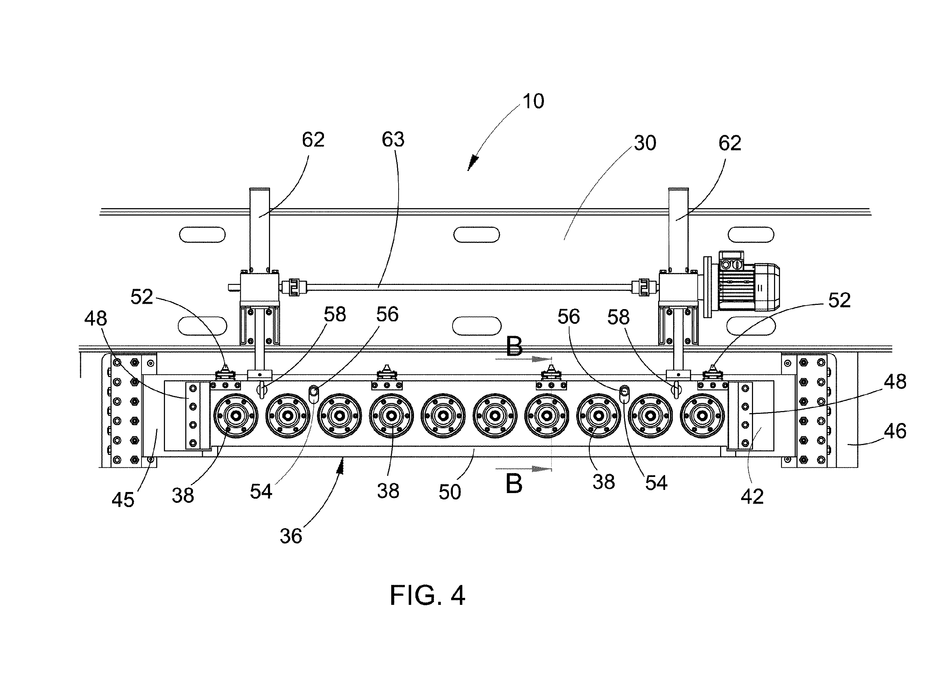

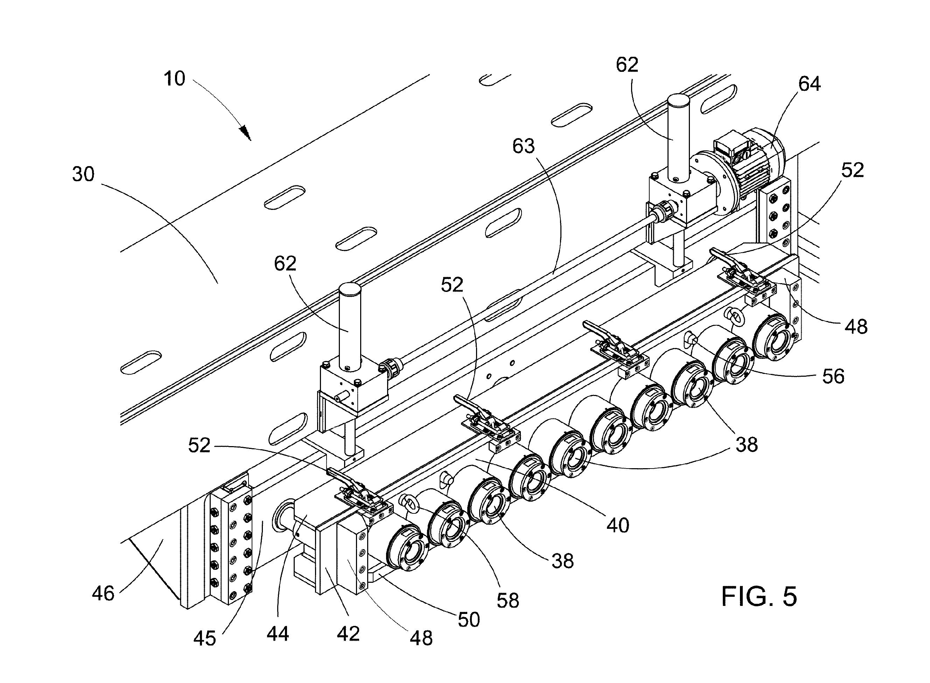

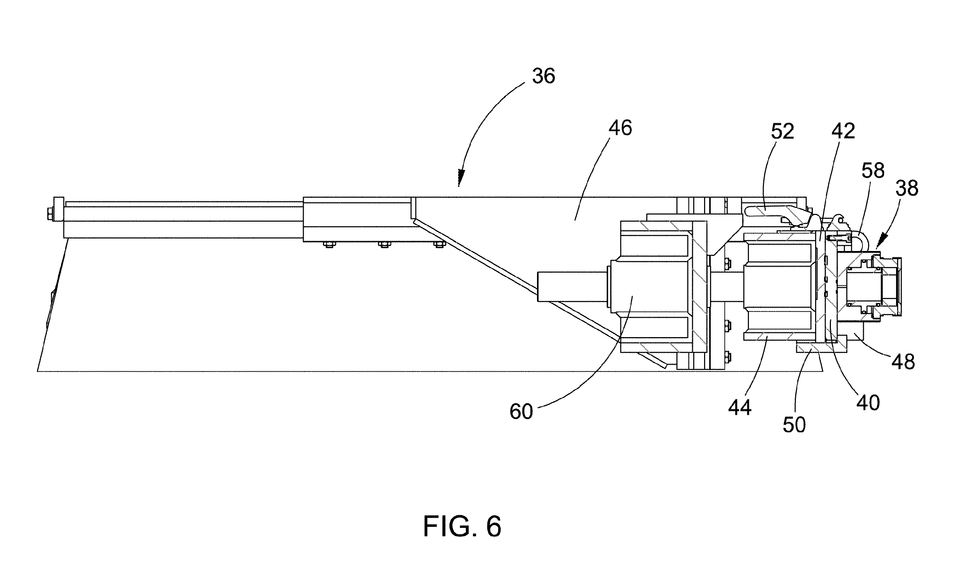

With special reference to Figures 2 to 8, the pneumatic testing apparatus 10 for welded steel pipes of the present invention is illustrated in detail and which defines the second station of non-destructive tests of the pipes test plant illustrated schematically above.

This apparatus is limited by two opposite ends, in that it manages the pipes in their longitudinal development. However the aforementioned drawings represent only a part of the apparatus and, more specifically, one of its two opposite ends, taking account of the fact that they are similar one to the other in terms of components and structural features.

The pneumatic testing apparatus 10 is placed between two opposite uprights, a fixed upright 30 and a mobile upright 30', with said latter upright movable towards/away from the fixed upright 30 by means of guides or slides so as to be able to regulate and adapt the distance between the uprights as a function of the length of the pipes to be subjected to testing, with said length comprised in an interval as a function of the technical testing specifications.

Between said two opposite uprights 30 and 30' a plurality of parallel and adjacent structures or frames 32 are placed, each one provided with means for the transverse movement of pipes 31 (in the direction indicated by the arrow X in Figure 2), coming from the output and unloading station 20, in the direction of the pneumatic testing apparatus 10 of the invention.

The means of transverse movement of the pipes 31 are defined by a system of transport/storage 34 comprising a pair of opposite chains or belts 33 each one provided with at least thirty pipe positions (with reference to only the portion of outward travel of the chain or belt) wherein each pipe position comprises rubberised elements 35 suitable for supporting each pipe 31 during the transport. Said transport/storage system is actuated by means of an electric motor.

To each of the two opposite uprights, fixed 30 and mobile 30', a blowing bushing assembly 36 is attached comprising at least ten bushings 38 attached to a bushings holder plate 40 in turn attached, in a removable manner, with respect to a backplate 42 rigidly restrained to a support structure 44 placed with respect to a further backplate 45 of a fixed structure 46 secured with respect to each of the two opposite uprights 30 and 30', with said support structure 44 which can be moved, in accordance with what is detailed here below, in the axial direction of the pipes (the structure of the bushings holder plate attached to the mobile upright 30', opposite the one attached to the fixed upright 30, is not described in detail in that it is wholly similar to that described for the fixed upright).

The backplate 42, whereto the bushings holder plate 40 is coupled, comprises two opposite vertical profiles 48 and a lower profile 50 placed along the lower edge of the backplate and L shaped. The two opposite vertical profiles 48 have the function of constituting a guide for the vertical positioning of the bushings holder plate 40 while the lower profile 50 constitutes a lower slotting or stop element for said same bushings holder plate.

The bushings holder plate 40 is secured with respect to the backplate 42 by means of gripper clamping elements 52 (two or more) with manual actuation in rapid opening/closing placed above the support structure 44 in an opposite position with respect to the lower profile 50 of the backplate 42.

In accordance with the preferred embodiment as shown in the drawings, the bushings holder plate 40 comprises two or more through slots 54 apt to allow the coupling with corresponding pins or pegs 56 projecting with respect to a front face of the backplate 42 turned in the direction of the bushings holder plate 40 in order to perform a correct centring between said bushings holder plate 40 and said backplate 42.

The bushings holder plate 40 is provided with two or more ringbolts 58 or similar means apt to allow the insertion of hooks for the lifting of the bushings holder plate during replacement of the same.

The further backplate 45, on the opposite side with respect to the support structure 44 of the backplate 42 and of the bushings holder plate 40, is provided with two or more actuators 60 (typically hydraulic cylinders) having the function of allowing a translation of the support structure 44 comprising the bushings holder plate 40 attached to the backplate 42 along the axial direction of the pipes 31 so as to bring the blowing bushings 38 close to the ends or heads of the pipes 31.

A pair of jacks 62 attached to the uprights 30 and 30', connected by a shaft 63 and actuated by a motor or motor reducer 64, allow an adjustment in a vertical direction of the further backplate 45 and, consequently, of the bushings holder plate 42 of the fixed upright with respect to that of the mobile upright and for a correct alignment of the bushings 38 coaxially to the heads or ends of the pipes 31.

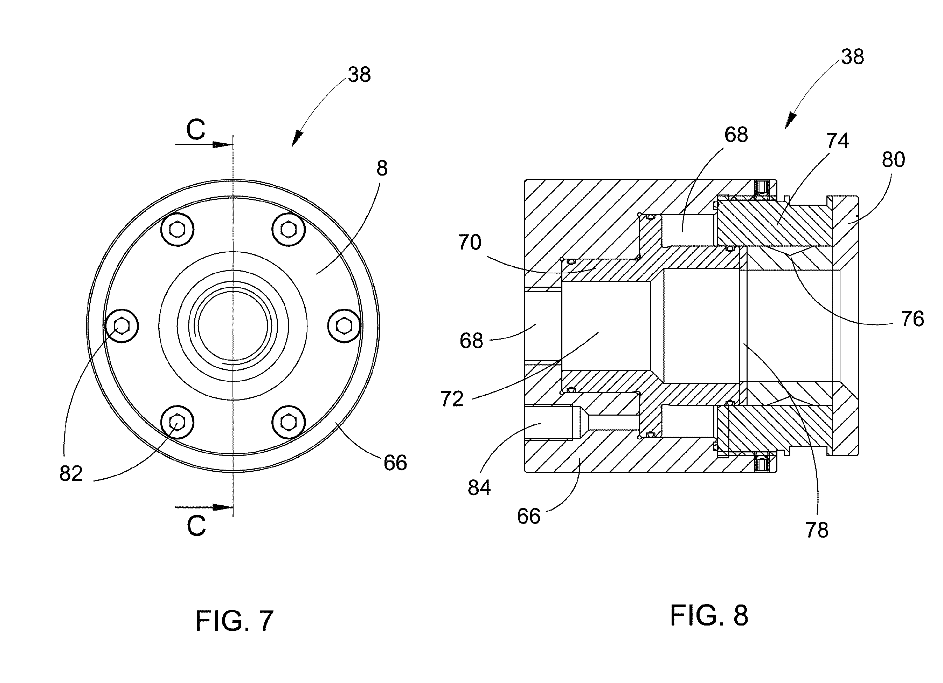

Each blowing bushing 38, schematised in detail in Figures 7 and 8, comprises a bushing body 66 attached to a front face of the bushings holder plate 40 and inside whereof an axial through compartment 68 is formed with differentiated diameters suitable for allowing the housing and the sliding (as detailed here below) of an internal slider 70 also provided with an axial through compartment 72.

An annular flange 74 is fitted externally to the internal slider 70 on the opposite side with respect to that of connection of the bushing body 66 with respect to the bushings holder plate 40 and rigidly restrained with respect to said bushing body by means of a threaded connection or another suitable retaining means.

Internally and coaxially to the annular flange 74 an annular seal 76 is placed, secured in position by means of a spacer ring 78 (placed between said annular seal and the internal slider) and of a centrally hollow flange 80, attached on a lower face of the annular flange 74 on the opposite side with respect to that of attachment to the bushing body 66 and attached to said annular flange by means of screws 82 or of equivalently known retaining means.

In the bushing body 66, at a diameter external with respect to the through compartment 68, a conduit 84 is formed, developed along a direction parallel to that of the axis of the bushing body and having the function of allowing the passage of a fluid, for example air, for the function described here below.

Each structure or frame 32 of the pneumatic testing apparatus 10 of the invention is provided, parallel to the bushings holder plate 40 (as schematised with particular reference to Figure 2), with a pair of opposite and parallel assemblies of grippers 86 provided with grippers 87, in a number corresponding to that of the bushings 38 of the bushings holder plate 40 and having the function of gripping and locking the pipes 31 during the pneumatic testing phase.

More particularly said assemblies of grippers 86 are moved in a vertical direction, for the function described here below, by means of actuators 88 attached to the structure or frame 32.

The functioning of the pneumatic testing apparatus of the present invention, described in detail above with reference to the constructional features, is explained here below.

The pipes 31 coming from the first station of non-destructive tests 18 are loaded, in groups of at least ten as a function of the number of bushings present on the bushings holder plate, in the pneumatic testing apparatus 10 and moved (along the direction indicated by the arrow X in Figure 2) by means of the transport/storage system 34 in the direction of the bushings holder plate 40 at which the grippers 87 of the opposite assemblies of grippers 86 are placed.

The assemblies of grippers 86, in rest position, are normally lowered with the grippers 87 below or flush with the shaped elements 35 of the belts or chains of the transport/storage systems 34, and are actuated in lifting when the group of pipes 31 reaches the bushings holder plates 40, so that the grippers 87 can embrace and lock the pipes 31 and, at the same time, lift them above the transport/storage systems 34 so as to place them coaxially to the bushings 38 of the bushings holder plates 40.

At this point the actuators 60 are actuated which impose a movement of translation in axial direction of the support structure 44 of the bushings holder plate so as to fit said bushings on the ends or heads of the pipes 31. In particular the heads or ends of said pipes are inserted in the annular seals 76 of each bushing 38.

The air injected through the conduit 84 of the bushing body 66 imposes a translation in axial direction of the internal slider 70 of the single bushings which, acting by means of the interposed spacer 78, determines the compression and the deformation in radial direction of the annular seal 76 which, in this way, performs a forcing along a circumferential portion of the external surface of the end or head of the single pipe and, at the same time, ensures the sealing against possible leaks.

The pipes rigidly tightened in this way with respect to the bushings 38 are subjected to the pneumatic test with pressure drop and with pressure differential (air-air test) consisting in the injection of pressurised air (maximum pressure 20 bars) in the pipes 31 through the bushings 38. The air used for said test is subjected beforehand to a treatment of drying and de-oiling and its temperature is controlled by means of an in-line chiller (not shown in the drawings).

The pneumatic test phase having ended, with which an air-water test phase can be combined with the immersion of the pipes in water, the group of pipes disengages from the coupling with the bushings, the assemblies of grippers 86 are lowered and the grippers 87 are opened, allowing the pipes to be moved by the transport/storage assembly 34 in the direction of the subsequent station defined by the cutting and end-facing station 22 likewise provided with a further transport/storage assembly 90 suitable for moving the pipes in the direction of a cutting head 92 which removes the end portions of the single pipe 31, of a deburring head 94 which performs an internal/external deburring of the pipe and of a cleaning head 96 apt to clean the interior of the pipe 31 by means of a polyurethane pig shot inside the same pipe.

The pipes which undergo these aforementioned machining processes are only and solely the pipes which have passed all the control tests. The pipes which have not passed the phase of pneumatic testing transit in the cutting and end-facing station without being subjected to any type of machining process described above.

The moving of the pipes 31 between the transport/storage assembly 34 and the further transport/storage assembly 90 is performed by means of a rocker device or walking beam 98 not described in detail in that known.

A traditional system with chains and flights takes the pipe 31 from the last position of the further transport/storage assembly 90 and accompanies it in the direction of the unloading and packaging station 24. The pipes not considered conforming, in that they have not passed the pneumatic testing phase, are discharged in a different area with respect to that of the conforming pipes.

All the operations performed in the stations which characterise the test plant, with the exception of the operation or phase of change of bushings holder plate which is actuated manually when the testing of pipes of different diameter is required, are managed and controlled automatically by means of a PLC (programmable logic controller) or another known type of industrial computer and a plurality of sensors placed in the plant which detect parameters such as the position of the pipes, the speeds of movement, the position of uprights, etc. and which send them to the control device so as to regulate the different stations optimally.

The operator has only the task of entering the values and the parameters of machining (diameter of the pipe, thickness, length), loading the pipes to be machined and unloading those machined, performing the bushings holder plate change of the pneumatic control apparatus.

As can be seen from the above the advantages that the pneumatic testing apparatus of the invention achieves in addition to the advantages of the test plant as a whole are clear.

The testing apparatus for welded pipes of the present invention allows advantageously the performing of a pneumatic test with pressure drop and pressure differential (or, additionally, also an air-water test with immersion of the pipes in water) on groups of at least ten pipes simultaneously using blowing bushes in a number equal to that of said pipes and all attached on a single bushings holder plate in such a way as to allow a rapid change of all the bushings by means of only the replacement of the bushings holder plate with reduced times of machine stop and consequent advantages from the point of view of production costs.

A further advantage of the pneumatic testing apparatus of the present invention is represented by the fact that the bushings holder plate is easy to couple and centre with respect to the support structure of the same.

Further advantageous is the presence of the grippers for gripping pipes positioned on grippers assemblies with lifting movement which makes the positioning of the pipes with respect to the bushings of the bushings holder plate more precise and more rapid. A further advantage is represented by the fact that the apparatus for pneumatic testing of the invention allows the performance of the test with a pressure whose maximum value reaches 20 bars, value higher than the traditional one and such as to allow the performance of the pneumatic testing according to more restrictive standards.

Further advantageous is the fact that the apparatus of the invention allows the performance of a test with pressure differential together with or as an alternative to that with pressure drop and this allows the detection of possible damage, with relative losses of pressure, considerably lower than those which can be detected with only the pressure drop test. As a consequence of this the pneumatic testing apparatus of the invention ensures a high degree of accuracy which has favourable repercussions on the good quality of the pipes.

A further advantage is represented by the fact that the blowing bushings are provided with an annular seal which, being deformable under the thrust action of the internal slider 70, allows the management of a range of nominal pipe diameters using the same bushings and this avoids continuous replacements of the blowing bushings and reduces the times of preparation and setting of the plant and, in particular, of the pneumatic test apparatus, in the case of tests on pipes whose diameter falls within the range permitted by the aforementioned seal.

A further advantage is represented by the fact that the apparatus of the invention and the plant whereof it is part are with fully automatic control and management with the operator who has substantially only control functions.

Although the invention has been described above with particular reference to one of its embodiments given solely by way of a non-limiting example, numerous changes and variations will appear clear to a person skilled in the art in light of the description given above. The present invention intends, therefore, to embrace all the modifications and the variations that fall within the scope of the following claims.

## Claims

1. A pneumatic testing apparatus (10) for welded pipes, particularly in steel, placed between a fixed upright (30) and a mobile upright (30') opposite and parallel one to the other and with the mobile upright (30') movable towards/away from the fixed upright (30), comprising a plurality of parallel and adjacent structures or frames (32) each provided with means for the movement of pipes (31) longitudinally placed between said fixed (30) and mobile (30') uprights defined by a transport/storage system (34) comprising a pair of opposite chains or belts (33) provided with rubberised elements (35) apt to support the pipes (31) during transport, a pair of blowing bushing assemblies (36) opposite and parallel and attached, respectively, one to the fixed upright (30) and one to the mobile upright (30') and each provided with blowing bushings (38) apt to be fitted on and tightly close opposite ends or heads of the pipes (31), the apparatus **characterised in that** the blowing bushing assemblies (36) comprise means for rapid replacement and hooking with respect to the fixed and mobile uprights and means for automatic positioning and adjusting of said bushing assemblies with respect to the pipes (31) co-operating with positioning means for pipes (31) for a reciprocal coupling between said pipes and said bushings.

2. The pneumatic testing apparatus according to claim 1, **characterised in that** each blowing bushing assembly (36) comprises a bushings holder plate (40) coupled in a removable manner to a backplate (42) rigidly restrained to a support structure (44) placed with respect to a further backplate (45) of a fixed structure (46) secured with respect to each of the two opposite fixed (30) and movable (30') uprights.

3. The pneumatic testing apparatus according to claim 2, **characterised in that** the backplate (42) comprises guide elements for a vertical positioning of the bushings holder plate (40) with respect to the backplate defined by two opposite vertical profiles (48), a lower slotting or stop element for the bushings holder plate with respect to the backplate defined by a lower profile (50) placed along the lower edge of said backplate (42) and L shaped, elements of centring of the bushings holder plate (40) with respect to the backplate (42) defined by two or more pegs or pins (56) projecting with respect to a front face of the backplate turned in the direction of the bushings holder plate and co-operating with corresponding through slots (54) of the bushings holder plate (40).

4. The pneumatic testing apparatus according to claim 1 or 2, **characterised in that** the rapid replacement and hooking means of the blowing bushing assembly (36) comprise gripper clamping elements (52) with manual actuation in rapid opening/closing placed above the support structure (44) in an opposite position with respect to the lower profile (50) of the backplate (42) and apt to lock the bushings holder plate (40) with respect to the backplate (42).

5. The pneumatic testing apparatus according to any one of the preceding claims, **characterised in that** the means of automatic positioning and adjustment of the blowing bushing assemblies (36) comprise two or more actuators (60) attached to a further backplate (45) on an opposite side with respect to the support structure (44) of the backplate (42) and a pair of jacks (62) attached to the uprights (30, 30'), said actuators (60) suitable for translating the support structure (44) of the bushings holder plate (40) along a horizontal plane in the direction of the ends or heads of the pipes (31) and said jacks (62) suitable for adjusting the further backplate (45) in a vertical direction.

6. The pneumatic testing apparatus according to claim 2, **characterised in that** the bushings holder plate (40) comprises at least ten blowing bushings (38).

7. The pneumatic testing apparatus according to any one of the preceding claims, **characterised in that** the blowing bushing (38) comprises a bushing body (66) attached to a front face of the bushings holder plate (40) and inside of which an axial through compartment (68) is formed, suitable for allowing the housing and the sliding of an internal slider (70) provided with an axial through compartment (72), an annular flange (74) externally fitted on the internal slider (70) on the opposite side with respect to that of connection of the bushing body (66) with respect to the bushings holder plate (40) and rigidly constrained with respect to said bushing body by means of a threaded connection, an annular seal (76) placed internally and coaxially to the annular flange (74) and secured in position by means of a spacer ring (78) placed between said annular seal and the internal slider, a flange (80) centrally hollow and attached on a lower front of the annular flange (74) on the opposite side with respect to that of attachment to the bushing body (66), a conduit (84) formed in the bushing body (66) at an external diameter with respect to the through compartment (68) and developed along a direction parallel to the axis of the bushing body, said conduit being apt to allow the passage of a fluid driving a translation in axial direction of the internal slider (70) for actuating a compression and deformation in a radial direction of the annular seal (76) apt to ensure tightening and locking of the pipe (31) with diameter comprised within a range of the nominal diameter and an air sealing between the bushing and the external surface of the pipe.

8. The pneumatic testing apparatus according to any one of the preceding claims, **characterised in that** the means of positioning pipes (31) for a reciprocal coupling between the pipes (31) and the bushings (38) of the bushings holder plate (40) comprise a pair of opposite and parallel assemblies of grippers (86), attached to each structure or frame (32) parallel to the bushings holder plate (40) and provided with grippers (87), in a number corresponding to that of the bushings (38) of the bushings holder plate (40) and having the function of gripping, locking and lifting the pipes (31) by means of actuators (88) attached to the structure or frame (32).

9. The pneumatic testing apparatus according to one or more of the preceding claims, **characterised in that** it is integrated in a test plant (12) for welded pipes, automatic, developed in line and comprising:
- an input station (14) comprising four in-line sections each provided with a pipes loading area (15) and a roller assembly (16) suitable for moving the pipes (31) in the direction of a first station of non-destructive tests (18);
- said first station of non-destructive tests (18) suitable for a testing of the pipes by means of parasitic or eddy currents and ultrasounds and enclosed in an insulated and air-conditioned cabin (17);
- an output and rejection station (20) in which the pipes exiting from the first station of non-destructive tests (18) are moved and automatically selected and sorted, with the pipes that have not passed the first test directed towards a rejection station and with the pipes conforming at the first test moved in the direction of the pneumatic testing apparatus (10);
- the pneumatic testing apparatus (10) for the performance of a pressure drop and pressure differential test with maximum pressure of 20 bars and of an optional air-water test;
- a cutting and end-facing station (22) in which the pipes (31) coming from the pneumatic testing apparatus (10), by means of a rocker or walking beam device (98), are moved to a cutting head (92) apt to remove end portions of the single pipe (31), to a deburring head (94) and to a cleaning head (96) apt to clean the interior of the pipe (31) by means of a polyurethane pig shot inside the same pipe;
- an unloading and packaging station (24) for the pipes that have positively passed all stages of testing and of the pipes that have not passed the test phases.

10. Test plant (12) for welded steel pipes, developed in line, comprising a non-destructive tests station (18) suitable for a test of the pipes by means of eddy currents and ultrasounds, **characterised in that** it also comprises a pneumatic testing apparatus according to any one of claims 1 to 8.
